Europäisches Patentamt

European Patent Office

Office européen des brevets

(11) Veröffentlichungsnummer: **0 508 252 A2**

# EUROPÄISCHE PATENTANMELDUNG

(21) Anmeldenummer: **92105417.7**

(22) Anmeldetag: **28.03.92**

(51) Int. Cl.⁵: **G11B 5/85**

(30) Priorität: **12.04.91 DE 4112095**

(43) Veröffentlichungstag der Anmeldung:
**14.10.92 Patentblatt 92/42**

(84) Benannte Vertragsstaaten:
**DE FR GB NL**

(71) Anmelder: **BASF Magnetics GmbH**
**Dynamostrasse 3**
**W-6800 Mannheim 1(DE)**

(72) Erfinder: **Richter, Hans Jürgen, Dr.**

Einlaubstrasse 54
W-6731 St. Martin(DE)
Erfinder: **Hibst, Hartmut, Dr.**
Brabnichstrasse 23
W-6905 Schriesheim(DE)
Erfinder: **Fischer, Gerd, Dr.**
Faberstrasse 20
W-6700 Ludwigshafen(DE)

(74) Vertreter: **Langfinger, Klaus-Dieter, Dr. et al**
**BASF AG Carl-Bosch-Strasse 38**
**W-6700 Ludwigshafen(DE)**

(54) Verfahren zur Herstellung eines magnetischen Aufzeichnungsträgers.

(57) Die Erfindung betrifft ein Verfahren zur Herstellung eines magnetischen Aufzeichnungsträgers, im wesentlichen bestehend aus einem polymeren, bahnförmigen Trägermaterial und einer kohärenten dünnen Schicht eines ferromagnetischen Materials, in einer Vakuumkammer durch Abscheiden eines Dampfstrahls des ferromagnetischen Materials auf der auf einem walzenförmigen Körper geführten, bewegten Fläche des Trägermaterials.

FIG.1

EP 0 508 252 A2

Die Erfindung betrifft ein Verfahren zur Herstellung eines magnetischen Aufzeichnungsträgers, im wesentlichen bestehend aus einem polymeren, bahnförmigen Trägermaterial und einer kohärenten dünnen Schicht eines ferromagnetischen Materials in einer Vakuumkammer durch Abscheiden eines Dampfstrahls des ferromagnetischen Materials auf der, über einen walzenförmigen Körper geführten, bewegten Fläche des Trägermaterials.

Magnetische Aufzeichnungsträger, deren magnetische Schicht aus einer kohärenten, ferromagnetischen Metalldünnschicht besteht, sind bekannt. Sie werden üblicherweise dadurch hergestellt, daß in einer Vakuumkammer das ferromagnetische Material in einer Verdampfereinheit verdampft und der resultierende Dampfstrahl auf der bewegten und über einen walzenförmigen Körper, üblicherweise einen Kühlkörper geführten Fläche eines polymeren Trägermaterials abgeschieden wird. Zur Erzeugung einer magnetischen Vorzugsrichtung in Längsrichtung der Trägerbahn wird der Dampfstrahl schräg zur Ebene des Trägermaterials geführt und abgeschieden. Die Einstellung eines Bedampfungswinkels läßt sich dadurch erreichen, daß durch Blenden Teile des Dampfstrahls abgedeckt werden, so daß nur noch die schräg zur Ebene des Trägermaterials gerichteten Anteile freigegeben sind. Außerdem läßt sich auch die Verdampferquelle derart anordnen, daß sie sich nicht senkrecht unterhalb der Rotationsachse des Körpers sondern verschoben in Richtung auf die senkrechte Projektion der Mantellinie des walzenförmigen Körpers befindet.

Entsprechend gefertigte Aufzeichnungsträger eignen sich in besonderer Weise zur Aufzeichnung von Informationen mit hoher Speicherdichte, wie sie beispielsweise bei den hohen Frequenzen moderner Videoaufzeichnungsverfahren auftreten. Bei solchen Videoanwendungen, die nach dem Helical-Scan-Prinzip arbeiten, bewegt sich der Magnetkopf in einem Winkel von im allgemeinen 3 bis 10° relativ zur Bandlängsrichtung. Je nach Aufzeichnungssystem ist zudem der Spalt des Magnetkopfs noch zusätzlich um einen Winkel, der beispielsweise bei dem sogenannten Hi8-System 10° betragen kann, gegen die Aufzeichnungsrichtung geneigt. Gegenüber der Bandlaufrichtung und damit gegenüber der magnetischen Vorzugsrichtung ergibt sich somit eine Neigung der magnetischen Aufzeichungsspuren, welche beispielsweise etwa 15° betragen kann. Diese Abweichung von der magnetischen Vorzugsrichtung des magnetischen Aufzeichnungsträgers bedeutet eine Einbuße an für die Wiedergabe verfügbarer remanenter Magnetisierung.

Aufgabe der vorliegenden Erfindung war es daher, ein Verfahren zur Herstellung von magnetischen Aufzeichnungsträgern vom Metalldünnschichttyp bereitzustellen, das den aufgezeigten Nachteil nicht aufweist, und insbesondere war es Aufgabe der Erfindung, einen magnetischen Aufzeichnungsträger vom Metalldünnschichttyp zu erhalten, bei dem die Projektion der magnetischen Vorzugsrichtung in die Bandebene mit der mittleren Aufzeichnungsrichtung übereinstimmt.

Es wurde nun gefunden, daß sich mit einem Verfahren zur Herstellung von magnetischen Aufzeichnungsträgern, im wesentlichen bestehend aus einem polymeren Trägermaterial und einer kohärenten dünnen Schicht eines ferromagnetischen Materials, in einer Vakuumkammer durch Erzeugen eines Dampfstrahls des ferromagnetischen Materials aus einer damit versehenen Verdampfereinheit und Abscheiden des Dampfstrahls auf dem, über einen walzenförmigen Körper, vorzugsweise einen Kühlkörper geführten Trägermaterial, wobei der Dampfstrahl unter einem von 90° abweichenden Winkel auf das Trägermaterial auftrifft, die Aufgabe lösen läßt, wenn in der Vakuumkammer ein aus einer Verdampfereinheit in Richtung des Körpers austretender Dampfstrahl des ferromagnetischen Materials unter einem Einfallswinkel von nicht weniger als 30° und bis zu 90° auf die zu bedampfenden Flächen zweier, über zwei getrennte, walzenförmige Körper gegenläufig geführte, bahnförmige Trägermaterialien auftrifft, mit der Maßgabe, daß die Verdampfereinheit in Achsrichtung der Körper derart verschoben ist, daß sie sich im wesentlichen zwischen beiden walzenförmigen Körpern befinden.

Die für die Ausbildung der dünnen ferromagnetischen Schichten geeigneten Materialien sind bekannt. Es sind dies die als dünne Schichten aufgebrachten Metalle Co, Ni, Fe sowie deren Legierungen und auch solche dünne Schichten, welche noch ein oder mehr weitere Elemente, wie z.B. Chrom, enthalten. Zu einer Verbesserung der chemischen und mechanischen Eigenschaften dieser Schichten trägt insbesondere auch die Anwesenheit von Sauerstoff bei, vor allem wenn Sauerstoff während des Bedampfungsvorgangs zugeführt wird.

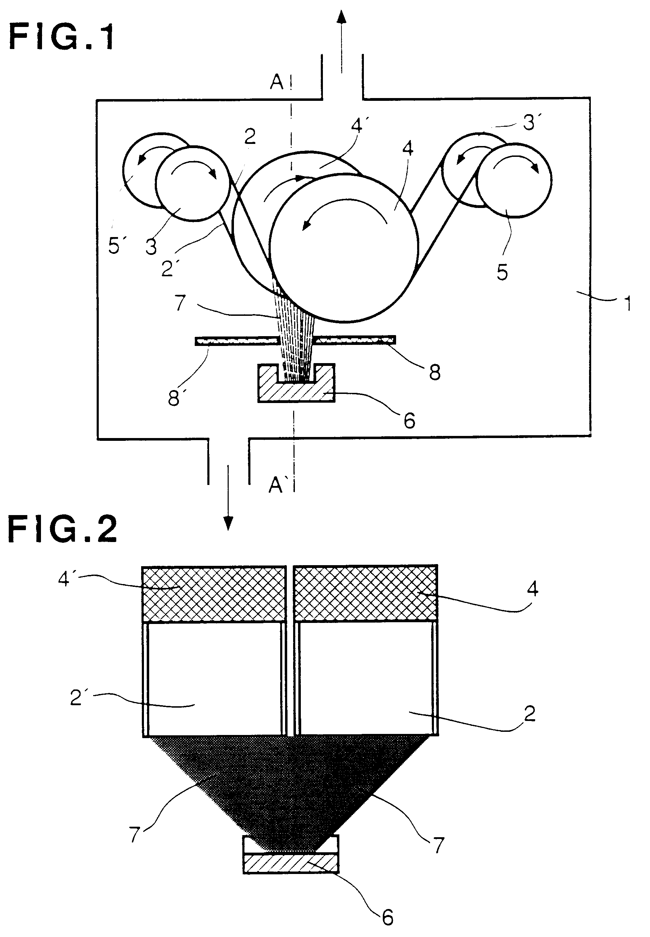

Die Durchführung des erfindungsgemäßen Verfahrens sei beispielhaft an den Figuren 1 und 2 erläutert. Dabei zeigt die

Figur 1    das Schema der Bedampfungseinrichtung gemäß dem erfindungsgemäßen Verfahren,

Figur 2    die Seitenansicht der Bedampfungseinrichtung gemäß Figur 1 entsprechend dem Schnitt A-A'.

Figur 1 zeigt beispielhaft eine für das erfindungsgemäße Verfahren geeignete Bedampfungseinrichtung. In einer Vakuumkammer 1 befinden sich zwei Einheiten zur Aufnahme und zum Transport zweier getrennter bahnförmiger Trägermaterialien 2 und 2'. Das Trägermaterial wird dabei von den Vorratsrollen 3 und 3' über die gegenläufigen walzenförmigen Körper 4 und 4' zu den Aufwickelrollen 5 und 5' geführt. Unterhalb der Körper 4 und 4', seitlich in Richtung der senkrechten Projektion der Mantellinien der Körper befindet sich die Verdampfereinheit 6 mit dem ferromagnetischen Material, dessen Dampfstrahl 7, bedingt durch die Blenden 8 und 8', mit einem Einfallswinkel zwischen nicht weniger als 30 und bis zu 90° auf die Trägermaterialbahnen 2 und 2' auftrifft. Gemäß dem erfindungsgemäßen Verfahren ist die Verdampfereinheit 6 in Achsrichtung der walzenförmigen Körper 4 und 4' derart verschoben, daß sie sich im wesentlichen zwischen beiden Körpern befindet. Diese Anordnung der Verdampfereinheit 6 in Bezug auf die Körper 4 und 4' wird durch Figur 2 verdeutlicht, welche einen Schnitt entlang der Linie A-A' der Figur 1 zeigt. Im Rahmen der Erfindung hat es sich außerdem als zweckmäßig herausgestellt, den Dampfstrahl 7 noch zusätzlich durch die Blenden 9 zu orientieren. Die Verschiebung der Verdampfereinheit und die Ausblendung des Dampfstrahls - wie in Figur 2 bildmäßig dargestellt - wird so gewählt, daß der mittlere Auftreffwinkel mit dem für das magnetische Aufzeichnungsmaterial vorgesehenen mittleren Aufzeichnungswinkel nahezu übereinstimmt.

Mit Hilfe des erfindungsgemäßen Verfahrens wird die Herstellung von magnetischen Aufzeichnungsträgern, insbesondere solche für die Videoaufzeichnung nach dem Helical-Scan-Prinzip, möglich, deren Projektion der magnetischen Vorzugsrichtung in die Bandebene mit der mittleren Aufzeichnungsrichtung übereinstimmt. Insbesondere gestattet das erfindungsgemäße Verfahren, die vorteilhafte Schrägorientierung der magnetischen Vorzugsrichtung auch unter dem Blickwinkel einer wirtschaftlichen Verfahrensführung zu erreichen, da durch die Doppelbeschichtung eine nur geringe Ausblendung des Dampfstrahles nötig ist, wodurch eine bessere Ausnutzung des verdampften ferromagnetischen Materials erreicht wird.

**Patentansprüche**

1. Verfahren zur Herstellung von magnetischen Aufzeichnungsträgern, im wesentlichen bestehend aus einem polymeren Trägermaterial und einer kohärenten dünnen Schicht eines ferromagnetischen Materials, in einer Vakuumkammer durch Erzeugen eines Dampfstrahls des ferromagnetischen Materials aus einer damit versehenen Verdampfereinheit und Abscheiden des Dampfstrahls auf dem, über einen walzenförmigen Körper geführten Trägermaterial, wobei der Dampfstrahl unter einem von 90° abweichenden Winkel auf das Trägermaterial auftrifft, dadurch gekennzeichnet, daß in der Vakuumkammer ein aus einer Verdampfereinheit in Richtung des walzenförmigen Körpers austretender Dampfstrahl des ferromagnetischen Materials unter einem Einfallswinkel von nicht weniger als 30° und bis zu 90° auf die zu bedampfenden Flächen zweier, über zwei getrennte, walzenförmige Körper gegenläufig geführte, bahnförmige Trägermaterialien auftrifft, mit der Maßgabe, daß die Verdampfereinheit in Achsrichtung der walzenförmigen Körper derart verschoben ist, daß sie sich im wesentlichen zwischen beiden walzenförmigen Körpern befinden.

# FIG.1

# FIG.2

4